# EUROPEAN PATENT APPLICATION

(11) **EP 1 916 845 A1**
(43) Date of publication of application: **30.04.2008**
(21) Application number: 06022166.0
(22) Date of filing: 23.10.2006
(51) Int. Cl.: H04N 7/18

(54) **Method and system for transmitting views from within an event area to spectators within the event area**

(71) Applicant: Tschimmel, Udo, 82166 Gräfelfing (DE)
(72) Inventor: Tschimmel, Udo, 82166 Gräfelfing (DE)
(74) Representative: Vossius & Partner

(57) **Abstract**

The present invention relates to a method for transmitting views of cameras located within an event area to spectators within or close to the event area, comprising the steps of transmitting two or more audio and video signals according to respective camera views from at least one camera located within the event area; allowing the spectators to individually select at least one of said audio and video signals for display and displaying the respective processed audio and video signals to the spectator.

## Description

### BACKGROUND OF THE INVENTION

The present invention is directed to a method and a system for transmitting views and/or sounds from within an event area to spectators within and/or close to and/or in any distance from the event area. An event area is preferably intended to mean a sports stadium or an arena, a theatre, a concert hall, public environment or any other area for events, particularly big events, and a limited view for at least to a number of spectators of the event.

Everybody knows the advantages of event areas for such big events, namely that there is a unique atmosphere of a live event the spectators or audience can participate in. This can be any type of sports game, such as a soccer game, or a concert of artists, an appearance of a well known personality, etc. However, there is the general disadvantage that many or even most spectators only have a limited view of the people playing, acting, singing, talking, the main attraction etc.

This disadvantage is sometimes attempted to be compensated by selling rather simple periscopes made of cardboard with telescopic effects. Nevertheless, such periscopes interfere with the views of further spectators behind the one/s being equipped with the periscope and - more important - still offer a very limited and poor view, especially at night or under artificial lighting conditions.

Alternatively, many potential spectators are staying away from live events as a result of the above mentioned disadvantages and/or the often relatively large amount of money required as entrance fee for such events. Quite often, such events can also be watched on TV for no or much lesser fees. Consequently, many events suffer from a dwindling number of spectators participating and/or willing to pay the entrance fees - thereby foregoing the advantage of experiencing the live event atmosphere.

US 2003/0112354 describes a method and a system for transmitting and displaying an event area-based in-play camera view on a hand held device, such as a PDA, hand held TV and data-enabled wireless telephone.

However, this is of limited convenience and is an implementation of a well known TV technology for the spectators in an event area. The main limitations of this technology are the loss of the live event character by limiting it to the tiny screen of a mobile phone or a PDA.

### SUMMARY OF THE INVENTION

Thus, it is the object of the present invention to make any kind of events more attractive for spectators participating and/or to attract even more potential spectators by such events.

The present invention attains the above object with the subject-matter of the claims.

More particularly the present invention is directed to a method and/or system for transmitting views captured by cameras and sounds/audio captured by microphones located within an event area to spectators within and/or close to and/or without the event area. Preferably, the present invention is also directed to an event area with a system for transmitting views and/or sounds from within an event area to spectators within the event area. According to a further aspect, the system is also directed to a system to provide views and/or sounds/audio to spectators close to the event arena, preferably in a distance of 1 km and more preferably within a distance of 500m. As mentioned above, such event areas can be sports stadiums or arenas, theatres, concert halls or any other closed or open public areas for events, particularly big events.

According to the present invention, the following steps are performed: transmitting two or more audio and video (AV) signals from different camera views from at least two cameras located within the event area; allowing the spectators to individually select at least one of said AV signals for display; and displaying the respective processed AV signals to the spectator. The system comprises the respective means for performing these steps and will be described further below.

In the following the term "AV signals" is used for all kinds of audio and video signals and is not limited to a specific format. Thus, AV signals could be the typical audio/visual signals from or for electronic equipments like cameras and televisions. However, an AV signal in the sense of the present invention could also be any digital data signal which comprises audio and/or visual information.

Additionally or alternatively the invention comprises a method or system for transmitting views of at least one camera located within an event area to spectators within and/or close to and/or without the event area with the following steps: transmitting at least one AV signal according to the respective camera view from at least one camera located within the event area; and displaying the respective processed AV signal to the spectator via a Head Mounted Display. A head-mounted display (HMD) is a display device that a person wears on the head to have video information directly displayed in front of the eyes. An HMD has either one or two small displays (e.g. CRT, LCD, LcoS: Liquid Crystal on Silicon, or OLED) with magnifying lenses embedded in a helmet, glasses or visor. With two displays, the technology can be used to show stereoscopic (3D) images by displaying an offset image to each eye. Such Head Mounted Display Technology (or HMD technology) embraces video glasses, such as so-called cyber glasses as they are already available on the market for iPod^{®} video devices, television sets, computers or other similar devices. These HMDs also offer the display of audio signals via earphones, headphones or similar devices.

The invention allows the spectators to obtain a better view, an instant replay and/or slow motion (if offered by the provider) by switching channels while nevertheless attending the live event at the event area. One or more of the available channels could present the highlights of the event as a loop - up to the time that channel is chosen by a spectator. Example: At any given time of a UEFA cup game, all highlights of the game from the beginning onward could be transmitted as a continuous loop with addition of new events as they occur. Slow motion could enhance the experience especially for spectators witnessing sports events.

More preferably the AV signal(s) are transmitted wirelessly, preferably by a radio/video (RF = Radio Frequency) transmitter and/or WLAN solution and/or a WiFi solution or a so-called hotspot plus the respective receivers for the spectators. Irrespective of this preferred solution, a wire-based plug-in solution at the location for the or a number of spectators is also embraced by the present invention.

In any case a spectator or a number of spectators or every spectator can be provided with the means for receiving the AV signals. Preferably such means allow for a personal display to one spectator or to a group of spectators while still maintaining the atmosphere of the live event.

Preferably the HMDs or cyber glasses have semitransparent or transparent projecting surfaces which allow the spectator viewing a video signal while still allowing a view within the event area in order to better maintain the live atmosphere.

Preferably the AV signals are encrypted, in particular the AV signals which are transmitted wirelessly to the spectator. More preferably a smartcard or a chip inserted into or within a decryption device decrypts said encrypted AV signals. Such a decryption device is preferably integrated in or at least connected to the HMD device. With such an embodiment an extra fee could be charged from spectators who intend to make use of the invention. A cascading price solution could be installed that grants access to more channels and other extras the higher the price; advert-free viewing could get the highest ticket or HMD rental price.

Moreover, the present invention is additionally or alternatively directed to a method or system for transmitting at least one view of at least one camera located within an event area to spectators within and/or close to and/or without the event area, comprising the steps of: transmitting at least one 3D video signal according to at least one 3D camera view from at least one 3D camera; and displaying the 3D video signal individually to at least one spectator or commonly to a plurality of spectators through a 3D stereoscopic video display system.

Such a solution even provides a more realistic signal stream or picture to the spectators. The 3D video signal may be a true 3D signal or a 3D signal which is generated from at least two common video signals or from any other conventional solutions.

A preferred embodiment of the present invention also makes use of cyber glass technology (HMD technology - Head Mounted Display) which are capable of displaying a 3D signal. Today, shooting in 3D poses no problem even for home videographers, and 3D video productions for HMDs are already easily available on the home video market.

To record video in 3D, an adapter is mounted in front of the lens of a camera to produce stereoscopic images. To view them, a commercially available 3D conversion box for a TV transmitter and "shuttered" cyberglasses are used to view the 3D images. In other words, they are produced with an "interlaced" signal where every other line of the video signal represents the second image. Thus, most preferably a "real total immersion (RTI)" experience is provided for the spectators.

The invention is furthermore directed to a method for transmitting AV signals within an event area to at least one spectator within and/or close to and/or without the event area, comprising the following steps: transmitting two or more AV signals via RF and/or WLAN and/or WiFi or similar transmission methods; and allowing the spectator(s) to individually select at least one AV signal for display; and displaying the AV signal to the spectator.

This would enable a spectator to select from a RF and/or WLAN and/or WiFi transmitter - including the possibility of so-called hotspots - between several AV signals. A spectator inside or outside of an event area could be provided with a respective receiver and could then choose the AV signals from the event area, another event area or other AV signals like films according to his own interests.

The invention is furthermore directed to a method for transmitting AV signals from within an event area to at least one spectator outside the event area, comprising the following steps: Streaming two or more AV signals from the event area via an internet server to affiliated hotspots such as Internet Cafes, Sports Bars, Pubs, Hotels, Trains, Airplanes, Private Homes and the like. This would enable the customers of these places to rent or buy HMDs with the special decryption device and thus be offered the same choice of AV channels like the spectators inside the event area, preferably via cable, WLAN, WiFi, RF or other similar technologies.

The present invention is intended to also embrace embodiments with features of the different embodiments discussed before. E.g., it is intended to be a more preferred embodiment of the present invention to provide a number of 3D video signals taken from within an event area and to offer a selection or choice between the signals for the spectators in that event area. The signals are preferably transmitted via RF and/or WLAN and/or WiFi technology which can be limited in its range according to the extent of the event area.

The invention will now be described with reference to the figures in which
- Figure 1: shows a schematic flow chart of a first embodiment of a system according to the present invention, and
- Figure 2: shows a further schematic view of a further embodiment of a system according to the present invention.

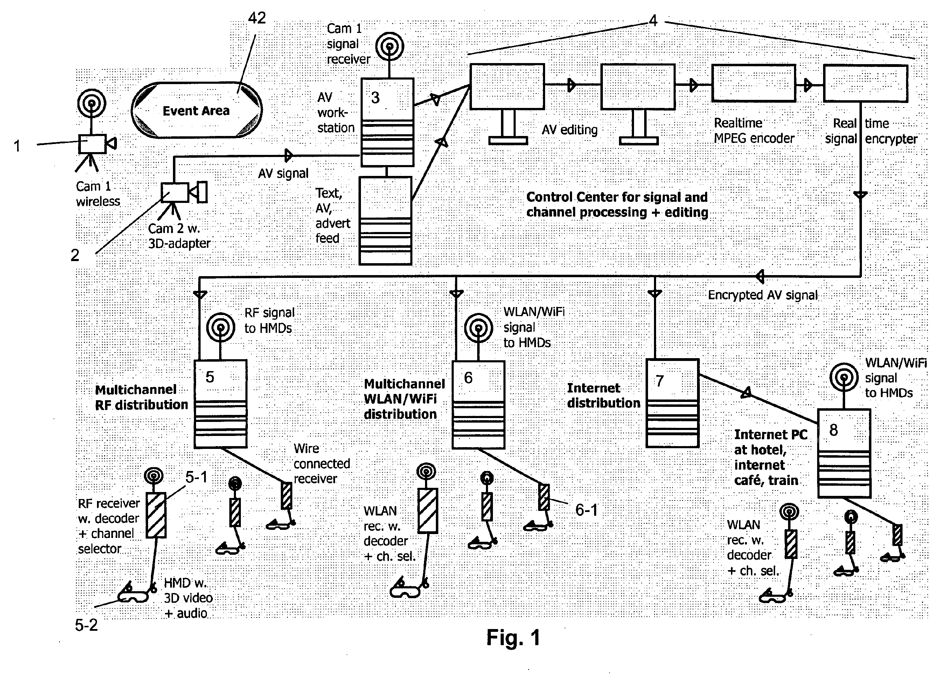

For the sake of simplicity, a system according to the present invention will be described with only two cameras. Figure 1 shows two cameras 1 and 2 located in the event area 42, wherein the first camera 1 is a wireless camera and camera 2 is a wired camera with a 3D adapter. Both cameras 1 and 2 send their AV signals to the AV workstation 3. The AV signals of the two cameras are processed and edited in the control center 4 for signal and channel processing and editing, wherein the AV signals are encoded into a realtime encoded signal stream. The type of encoder - like MPEG which reduces the amount of signal data - can be chosen according to the present state-of-the-art. This stream is then realtime encrypted, such that only users with a proper decryption code, e.g. in form of a smart card, can decrypt the signal stream and watch the video and hear the audio. As discussed above, any signal with audio and/or video information should be understood as an AV signal. Thus, the encrypted signal stream is a type of an AV signal.

The encrypted AV signal is distributed to an RF transmitter 5, which distributes or transmits the encrypted AV signal via radio frequency to potential customers or spectators. A spectator receives the encrypted AV signal via RF (radio frequency) receiver or via receiver which is wired to the transmitter 5. Preferably, the transmitting power of the RF transmitter 5 is adjustable or limited such that only receivers within or close to the event area receive said signal. The HMDs 5-2 are connected to the receivers 5-1, such that a spectator can watch the video stream and hear the audio stream. Since the AV stream is encrypted, the receivers comprise an decryption device, wherein with a proper code (e.g. in form of a smart card) the encrypted AV stream will be decrypted. In case there is a 3D-adapter camera, like camera 2 in this embodiment, a spectator can watch an 3D-stream.

Still another method for a wireless distribution of the encrypted AV stream is achieved with a WLAN or WiFi hotspot which can also use any other available state-of-the-art technology for wirelessly distributing the signal. Again, the encrypted AV signal is distributed to the WLAN hotspot 6 and further transmitted to WLAN receivers 6-1.

The encrypted AV stream can also be distributed via the Internet, such that spectators in hotels, internet cafes, airplanes, or trains can watch the AV signal, if the spectators are authorized (if they have leased or bought or obtained the proper decryption device). Therefore, the encrypted AV stream is transmitted to an internet server 7 which can further distribute the signal to additional servers which then distribute the signal either wired or wireless.

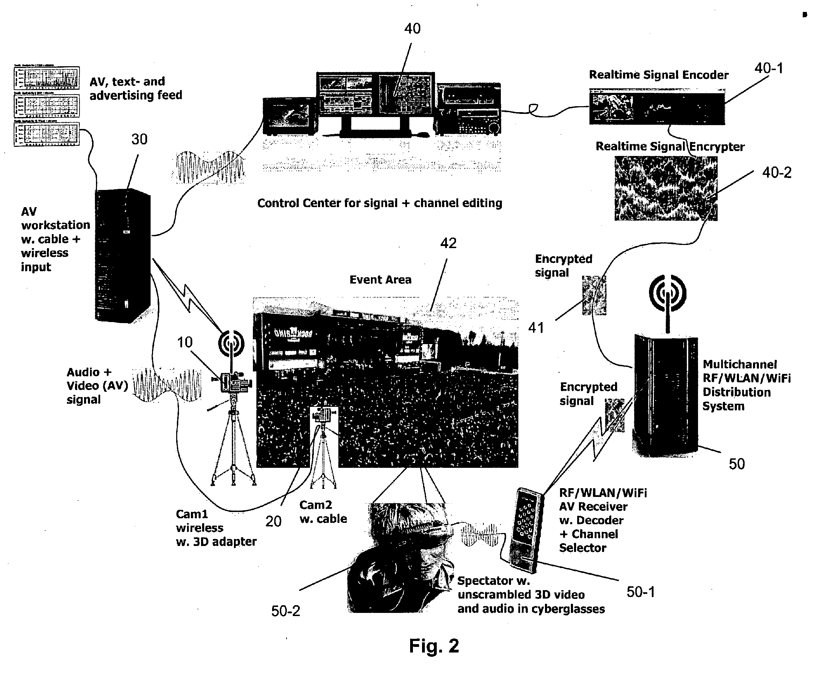

Figure 2 shows a further schematic view of a further embodiment of a system according to the present invention. Again, there are two cameras 10 and 20 located in the event area 42, wherein the first camera 1 is a wireless camera and camera 2 is a camera with a cable connection to the AV workstation 30. The AV signal is forwarded from the AV workstation to the control center for signal and channel processing and editing 40. The AV workstation also receives advertising information in form of an AV text and advertising feed. The AV signal is encoded realtime into a signal stream by the realtime signal encoder 40-1 and encrypted realtime by the signal encrypter 40-2. The encrypted signal 41 is transmitted to an RF transmitter 50, a WLAN hotspot and/or WiFi or any other wireless signal distribution system, wherein said distribution system further distributes or transmits the encrypted AV signal via radio frequency, WLAN or WiFi or any other wireless signal or wired or via internet to potential customers or spectators.

It is obvious for the person skilled in the art that the present invention is not limited by what has been particularly shown and described hereinabove. Rather the scope of the present invention includes both combinations and sub-combinations of the features described hereinabove as well as modifications and variations thereof with would occur to a person skilled in the art upon reading the foregoing description and which are not in the prior art.

## Claims

1. Method for transmitting views of cameras located within an event area to spectators within or close to the event area, comprising the following steps:
(a) transmitting two or more audio + video (AV) signals according to respective camera views from at least one camera located within the event area;
(b) allowing the spectators to individually select at least one of said AV signals for display;
(c) displaying the respective processed AV signals to the spectator.

2. Method for transmitting views of at least a camera located within an event area to spectators within or close to the event area, comprising the following steps:
(d) transmitting at least one AV signal according to the respective camera view from at least one camera located within the event area; and
(e) displaying the respective processed AV signal to the spectator(s) via a Head Mounted Display (HMD).

3. Method for transmitting at least one view of at least one camera located within an event area to spectators within or close to the event area, comprising the following steps:
(a) transmitting at least one 3D video signal according to at least one 3D camera view from at least one 3D camera; and
(b) displaying the 3D video signal individually to at least one spectator or commonly to a plurality of spectators through a 3D stereoscopic video display system.

4. Method for transmitting video signals within an event area to at least one spectator within or close to the event area, comprising the following steps:
(a) transmitting two or more AV signals via RF and/or WLAN and/or WiFi and/or any other available state-of-the-art technology for wirelessly distributing the signal and/or via wires; and
(f) allowing the spectator(s) to individually select at least one AV signal for display; and
(b) displaying the AV signal to the spectator(s).

5. Method according to any two, three or all four of the preceding claims.

6. Method according to claims 1 and/or 2, wherein the video signal(s) are transmitted wirelessly.

7. The method according to claim 2, 4 and/or 5, wherein the 3D stereoscopic video display systems comprise 3D cyber glasses.

8. The method according to any of the preceding claims, wherein the said transmission of AV signals comprises live and/or instant replay and/or streaming event loops taken from said cameras.

9. The method according to any of the preceding claims, wherein at least one of said transmitted AV signals is encrypted.

10. The method according to claim 8, wherein a smartcard inserted in a decryption device decrypts said encrypted AV signals.

11. System for carrying out any of the methods according to claims 2, 3 and 5 to 10, in particular with
a means for transmitting AV signals from at least one camera located within the event area;.
a means for displaying processed AV signals to an spectator.

12. System according to claim 11, wherein the system further comprising a means for selecting at least one of the transmitted signals.

13. System according to claim 11 or 12, wherein said means for displaying is adapted for displaying 3D video signals.

14. Kit for a system according to the preceding system claims with means for receiving the AV signal and with 3D cyber glasses

15. Use of the method, system or kit according to any of the respective preceding claims for transmitting views of cameras located within an event area to spectators within or close to the event area.
